# FASCICULE DE BREVET EUROPEEN

(11) **EP 1 559 501 B1**
(45) Date de publication et mention de la délivrance du brevet: **30.07.2008**
(21) Numéro de dépôt: 05300005.5
(22) Date de dépôt: 05.01.2005
(51) Int. Cl.: B23P 21/00, B23P 23/00

(54) **Dispositif d'usinage et d'équipement de profilés ou de cadres destinés à la fabrication d'huisseries ou analogue**
Vorrichtung zur Bearbeitung und Ausrüstung von Profilen oder Rahmen für die Herstellung von Türrahmen oder dergleichen
Device for machining profiles or frames for the fabrication of door frames or similar

(30) Priorité: 06.01.2004 FR 0450012
(43) Date de publication de la demande: 03.08.2005
(73) Titulaire: Ambonati Frères, 47190 Aiguillon (FR)
(72) Inventeur: Ambonati, Paul, 47190 Aiguillon (FR)
(74) Mandataire: Fantin, Laurent

(56) Documents cités:
- EP-A- 0 517 552
- DE-A- 3 203 025
- DE-A- 19 805 574
- DE-A1- 10 212 202
- GB-A- 2 263 127
- US-A- 5 022 143

## Description

La présente invention se rapporte à un dispositif d'usinage et d'équipement de profilés destinés à la fabrication d'huisseries, de battants ou analogue (voir, par exemple, DE-19805574-A).

Les huisseries ou les battants sont réalisés à partir de profilés métalliques, en bois ou en matière plastique qui sont usinés avant d'être assemblés en équerre de manière à former des cadres. Selon les cas, les profilés sont équipés de différents éléments rapportés tels que des serrures, des supports de roulettes ou autres. Compte tenu de la diversité des dimensions, des formes et des équipements des profilés, leur fabrication nécessite une gestion des flux de profilés précise de manière à limiter les rebus.

Selon un procédé connu, on a recours à un centre d'usinage susceptible de réaliser les différents usinages sur les profilés, un magasin d'approvisionnement en profilés tronçonnés étant disposé en amont et un magasin de stockage des profilés usinés en aval.

Le magasin d'approvisionnement comprend un plan de chargement des profilés selon leurs dimensions et leurs formes et des moyens pour les introduire les uns à la suite des autres dans le centre d'usinage.

Le centre d'usinage peut comprendre plusieurs postes d'usinages, par exemple un poste de défonçage pour réaliser des ouvertures ou des découpes dans les profilés et une grugeuse pour réaliser les usinages en bout de profilés. Des convoyeurs sont prévus pour acheminer les profilés au droit des différents postes ainsi que des moyens d'orientation permettant d'aiguiller les profilés en fonction des usinages à réaliser.

Le magasin de stockage de profilés usinés comprend des chariots de stockage ainsi que des moyens de triage permettant d'orienter chaque profilé vers un chariot dédié en fonction des usinages réalisés.

Un poste de contrôle est généralement prévu pour commander l'ensemble. Ainsi, selon une première variante, en fonction d'un plan de chargement en profilés tronçonnés, le poste de contrôle commande :
- l'introduction des profilés les uns à la suite des autres dans le centre d'usinage,
- les moyens d'orientation pour acheminer les profilés vers les postes d'usinage nécessaires en fonction des usinages à réaliser,
- les postes d'usinage pour qu'ils fonctionnent selon une programmation fonction des usinages à réaliser sur le profilé, et
- les moyens de triage du magasin de stockage de manière à placer un type de profilés usinés sur un chariot dédié.

Suite à l'usinage, les chariots chargés en profilés usinés sont acheminés vers des postes d'équipement en éléments rapportés. Ainsi, il existe un poste dédié au montage des roulettes au niveau duquel un opérateur introduit et fixe un support de roulettes sur le profilé, un autre poste dédié au montage des serrures et ainsi de suite.

En suivant, les profilés usinés et stockés d'une certaine manière en amont des postes d'équipement doivent en aval être stockés en fonction de leur usinage et de leur équipement dans des chariots dédiés. Il est important que les profilés soient bien triés en fonction de leurs dimensions, des usinages et/ou de leurs équipements pour alimenter correctement en suivant un poste d'assemblage des profilés entre eux.

Or, compte tenu de la diversité des dimensions, des formes, des usinages et des équipements des profilés, la gestion de ces derniers de manière manuelle au niveau des différents postes d'équipement constitue une source d'erreurs susceptibles de perturber la chaîne d'assemblage et de générer des rebus.

Aussi, la présente invention vise à pallier les inconvénients de l'art antérieur en proposant un nouveau procédé d'usinage et d'équipement de profilés destinés à la fabrication d'huisseries, de battants ou analogue permettant d'améliorer la gestion du flux des profilés.

A cet effet, l'invention a pour objet un dispositif d'usinage et d'équipement de profilés, de parties de cadre ou de cadres destinés à la fabrication d'huisseries, de battants ou analogue tel que défini à la revendication 1.

Cette solution permet de supprimer les risques d'erreurs liées à la manipulation des profilés lors de la mise en place des éléments rapportés.

L'invention vise également à proposer un dispositif pour la mise en oeuvre du procédé.

D'autres caractéristiques et avantages ressortiront de la description qui va suivre de l'invention, description donnée à titre d'exemple uniquement, en regard des dessins annexés sur lesquels:
- la figure 1 est un schéma illustrant le dispositif d'usinage et d'équipement selon l'invention,
- la figure 2 est une vue en perspective du poste d'équipement,
- les figures 3A à 3G représentent un synoptique illustrant le poste de mise en place de supports de roulettes,
- la figure 4 est une vue de dessus du poste de mise en place des supports de roulettes,
- les figures 5A à 5H représentent un synoptique illustrant le poste de mise en place des serrures, et
- la figure 6 est une représentation schématique des visseuses utilisées pour la fixation des serrures.

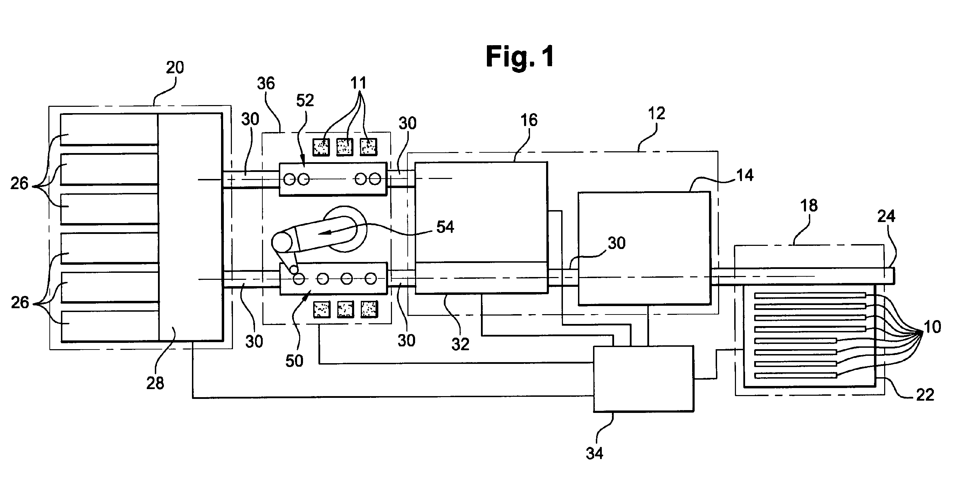

Sur la figure 1, on a représenté de manière schématique un dispositif d'usinage et d'équipement de profilés 10 destinés à la fabrication d'huisseries, de battants ou analogue.

Ces profilés ont des profils et des dimensions variés et peuvent être en bois, en matière plastique ou métalliques. Préalablement à leurs assemblages, ces profilés sont généralement usinés et équipés d'éléments rapportés 11 tels que des serrures, des supports de roulettes ou autres.

De manière connue, les profilés 10 sont usinés dans un centre d'usinage 12 comprenant un ou plusieurs postes. A titre d'exemple, le centre d'usinage 12 comprend une défonceuse 14 susceptible de réaliser des découpes ou des ouvertures dans les profilés et une grugeuse 16 susceptible d'usiner les extrémités des profilés.

Le dispositif comprend en amont du centre d'usinage 12 un magasin d'approvisionnement 18 susceptible d'alimenter ledit centre d'usinage en profilés tronçonnés et, en fin de parcours des profilés, un magasin de stockage 20 dans lequel sont susceptibles d'être stockés des profilés usinés et équipés.

Selon un mode de réalisation, le magasin d'approvisionnement 18 comprend un plan de chargement 22 des profilés tronçonnés qui sont rangés en fonction de leurs profils et de leurs dimensions, et des moyens pour les introduire les uns à la suite des autres dans le centre d'usinage, par exemple un convoyeur 24.

Selon un mode de réalisation, le magasin de stockage 20 comprend un ou plusieurs chariots 26 sur lesquels sont susceptibles d'être stockés les profilés usinés et équipés selon différents critères de rangement, notamment en fonction de leurs profils, de leurs dimensions, de leurs usinages et/ou de leurs équipements, des moyens 28 de triage étant prévus pour répartir chaque profilé dans le chariot dédié.

Des convoyeurs 30 sont prévus entre le magasin d'approvisionnement et le centre d'usinage, entre les différents postes d'usinage et depuis le centre d'usinage jusqu'au magasin de stockage pour acheminer les profilés, des moyens d'orientation 32 permettant d'aiguiller lesdits profilés selon un parcours prédéterminé pour chacun.

Le magasin d'approvisionnement, le magasin de stockage, les moyens de triage, les convoyeurs, et les moyens d'orientation ne sont pas plus détaillés car ils sont à la portée de l'homme de l'art.

Un poste de contrôle 34 est prévu pour gérer le flux des profilés 10 et commander :
- le magasin d'approvisionnement de manière à introduire dans le centre d'usinage des profilés,
- le ou les postes d'usinage de manière à ce qu'il(s) fonctionne(nt) selon une programmation prédéterminée en fonction du profilé présent,
- les moyens d'orientation de manière à orienter le profilé présent en fonction du cheminement prédéfini pour chaque profilé, et
- les moyens de triage de manière à disposer le profilé dans le chariot adéquat en fonction des usinages et de l'équipement réalisés.

Selon l'invention, le dispositif comprend un poste d'équipement 36 au niveau duquel les profilés 10 sont munis d'au moins un élément rapporté 11, ledit poste étant disposé entre le centre d'usinage 12 et le magasin de stockage 20 et commandé par le poste de contrôle 34. Par commander, on entend la transmission d'au moins une instruction depuis le poste de contrôle vers le poste d'équipement, par exemple une instruction permettant d'informer le poste d'équipement du type du profilé présent de manière à ce que ledit poste 36 effectue les opérations adéquates.

Cette solution permet de limiter les risques d'erreurs lors de l'équipement des profilés et de contrôler à partir d'un poste 34 unique le flux des profilés lors de l'usinage et de l'équipement.

Selon l'invention, chaque profilé est repéré tout le long de son parcours de manière à l'acheminer, à l'usiner et à l'équiper de manière adéquate sans risque d'erreurs.

Ce repérage peut se faire par différents moyens.

Une première solution consiste à apposer un moyen d' identification, notamment un code barre, sur chaque profilé et à prévoir des moyens de lecture au droit des postes 12, 28, 32, 36 de manière à identifier le profilé présent au droit de chacun.

Une autre solution consiste à prévoir des capteurs de présence au niveau des postes 12, 28, 32, 36 susceptibles de renseigner le poste 34 de contrôle de la présence d'un profilé de manière à ce que ledit poste 34 détermine la position des profilés dans le dispositif et les suit tout le long de leurs parcours, ces derniers étant repérés au départ à la sortie du magasin d'approvisionnement.

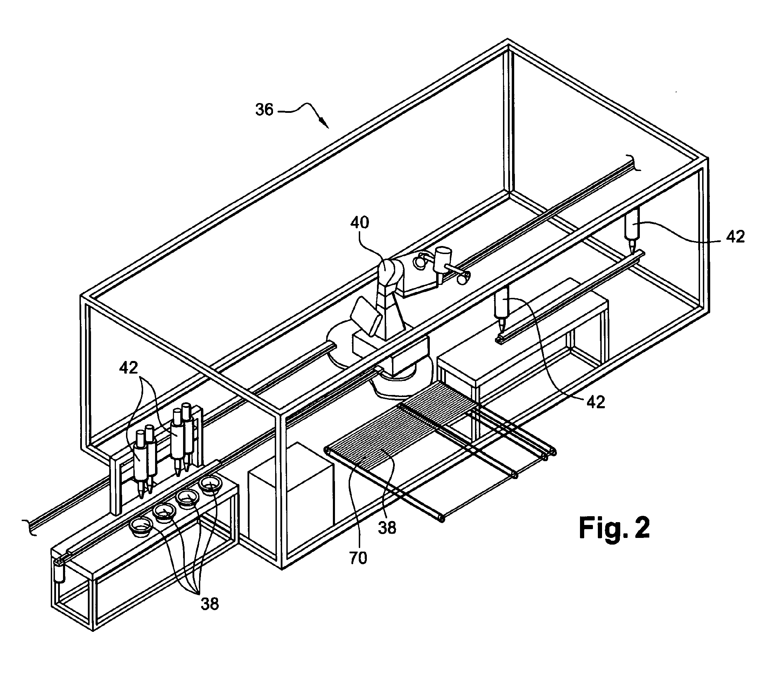

Sur la figure 2, on a représenté à titre d'exemple un mode de réalisation du poste d'équipement 36.

Ce poste d'équipement 36 comprend au moins un magasin 38 d'éléments rapportés 11, des moyens 40 de mise en place desdits éléments 11 ainsi que des moyens 42 de fixation desdits éléments 11. Des convoyeurs ainsi qu'éventuellement des moyens d'orientation sont prévus à l'intérieur du poste d'équipement 36 pour acheminer les profilés de manière adéquate. Des capteurs sont avantageusement prévus pour renseigner le poste de contrôle 34 et immobiliser correctement les profilés par rapport aux moyens 40, 42 de mise en place et de fixation.

En variante, le poste d'équipement 36 peut comprendre des postes d'assemblage de sous ensembles, tels que les serrures et leurs tiges pour une fermeture dite trois points.

Selon un mode de réalisation, les moyens 40 de mise en place peuvent prendre la forme d'un robot avec un bras manipulateur susceptible de prendre un élément dans un magasin et de le mettre en place au niveau du profilé.

En complément, les moyens 42 de fixation comprennent une ou plusieurs visseuses rapportées sur un bâti, de préférence de manière réglable, permettant de fixer les éléments rapportés 11 sur les profilés à l'aide de vis auto-foreuse.

Selon une autre caractéristique de l'invention, dans le cas de la mise en place d'un support de roulettes, ledit support de roulettes habituellement parallélépipédique est selon l'invention légèrement évasé de manière à faciliter son introduction dans une rainure par les moyens 40 de mise en place.

Selon une autre caractéristique de l'invention, le ou les usinages, notamment la ou les gorges, prévus pour les serrures sont légèrement évasés de manière à faciliter la mise en place desdites serrures.

En variante, le poste d'équipement 36 peut comprendre un ou plusieurs postes de mise en place de manière manuelle permettant à un opérateur d'assembler et de fixer les éléments rapportés. Même dans ce cas simplifié, l'acheminement des profilés au droit des postes de mise en place est contrôlé par le poste de contrôle 34 ce qui élimine les risques d'erreurs de manipulation des profilés, ces derniers étant automatiquement repérés tout le long de leurs parcours entre le magasin d'approvisionnement et le magasin de stockage.

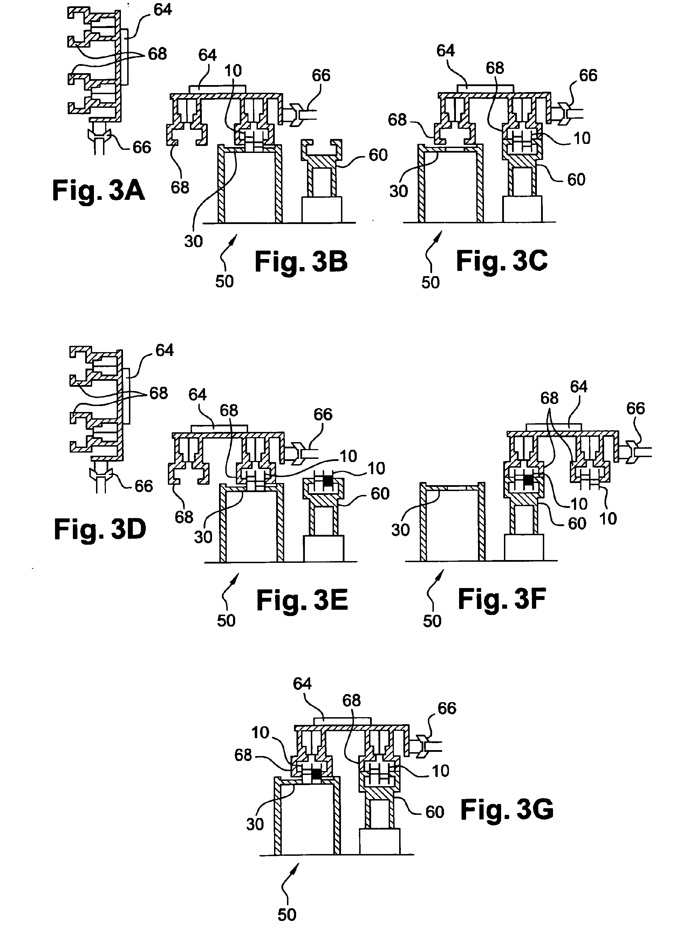

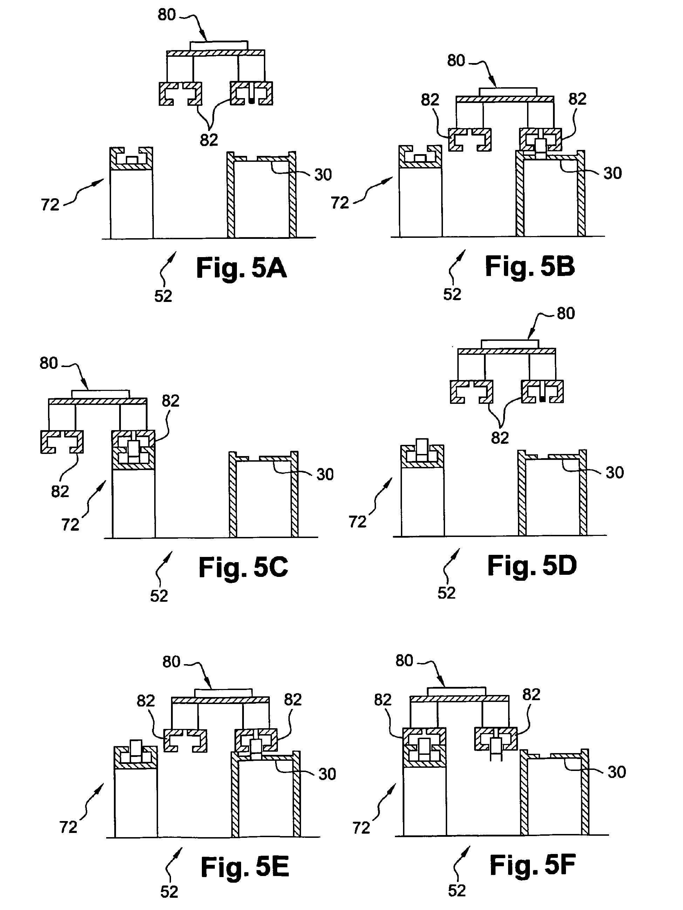

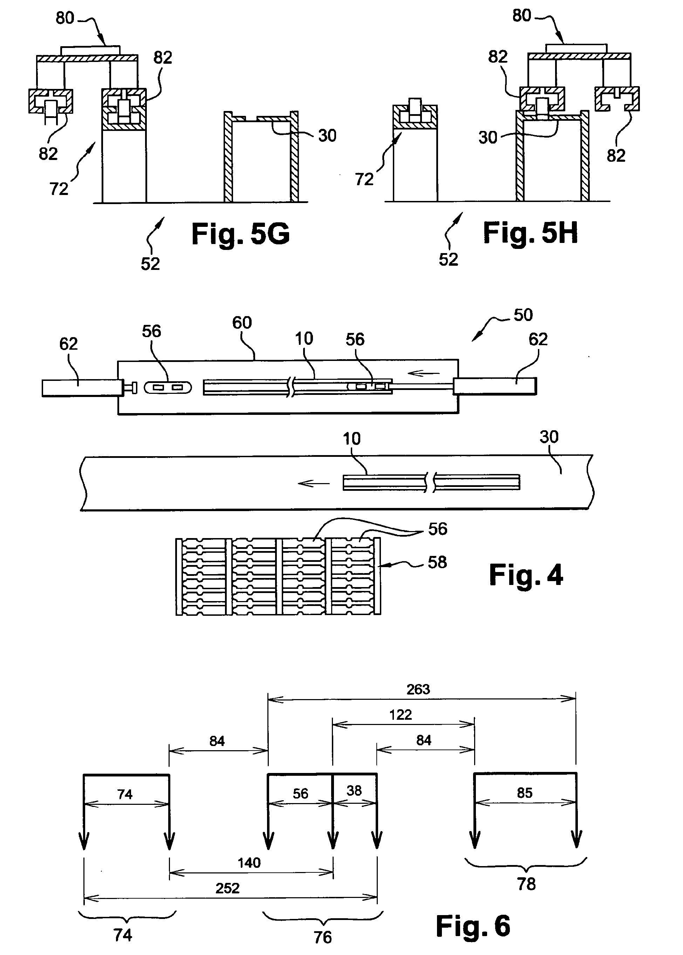

Selon un mode de réalisation préféré, le poste d'équipement comprend un poste 50 de mise en place de supports de roulettes, illustré sur les figures 3A à 3G et 4, et/ou un poste 52 de mise en place des serrures, illustré sur les figures 5A à 5H et 6, disposés de part et d'autre d'un robot ou bras articulé 54 et alimentés chacun par un convoyeur 30 en profilés 10.

Le poste 50 de mise en place des supports de roulettes 56 comprend un magasin 58 de supports de roulettes, un support 60 pour les profilés, des moyens 62 pour insérer les supports 56 dans les profilés ainsi que des moyens de fixation du support de roulettes sur un profilé, non représentés.

Le support 60 comprend une surface sur laquelle peut être déposé un profilé 10 avec de chaque côté un actionneur 62 dont la tige est susceptible de pousser un support de roulettes et de l'introduire dans le profilé 10 via les extrémités dudit profilé.

Le robot comprend à son extrémité libre une première tête 64 adaptée pour manipuler les supports de roulettes et les profilés. La première tête 64 comprend une première pince 66 et de préférence deux une pour chaque support de roulettes. En complément, ladite tête comprend une pince 68 prévue pour saisir un profilé et de préférence deux pinces 68 séparées d'une distance correspondant à l'écartement entre le support 60 et le convoyeur 30.

Le mode opératoire du poste 50 de mise en place des supports de roulettes est le suivant :
Dans un premier temps, la tête 64 à l'aide des pinces 66 prend deux supports de roulettes 56 et les dépose au droit de chaque actionneur 62, comme illustré sur la figure 3A.
Dans un deuxième temps, la tête 64 à l'aide d'une pince 68 saisit un profilé 10 et le dépose sur le support 60 entre les actionneurs 62, comme illustré sur les figures 3B et 3C.
Dans un troisième temps, la tête 64 à l'aide des pinces 66 saisit deux nouveaux supports de roulettes 56, comme illustré sur la figure 3D. Pendant ce temps, les actionneurs poussent les supports de roulettes dans le profilé déposé sur le support 60. La tête 64 dépose alors les supports de roulettes 56 au droit des actionneurs 62.

Pendant que les supports de roulettes enfilés dans le profilé sont fixés, la tête 64 à l'aide d'une pince 68 saisit un nouveau profilé 10 comme illustré sur la figure 3E.

La tête 64 se translate alors de manière à venir saisir avec la seconde pince 68 le profilé 10 équipé des supports de roulettes, comme illustré sur la figure 3F.

En suivant, la tête 64 se translate de manière à venir déposer le profilé 10 équipé des supports de roulettes sur le convoyeur 30 et le profilé 10 non équipé sur le support 60.

Pendant que la tête 64 à l'aide des pinces 66 saisit de nouveaux supports de roulettes, les actionneurs 62 introduisent les supports de roulettes déjà déposés sur le support 60 dans le profilé 10 comme indiqué dans le troisième temps et ainsi de suite.

Cet agencement du poste 50 de mise en place des supports de roulettes ainsi que ce mode opératoire assurent un rendement optimal.

Le poste 52 de mise en place des serrures comprend un magasin 70 de serrures (visible sur la figure 2) ainsi qu'un poste de vissage 72 équipé d'une série de visseuses.

Le poste de vissage 72 comprend des moyens d'immobilisation pour maintenir le profilé lors du vissage. En complément, il comprend trois groupes de visseuses, un groupe amont 74, un groupe central 76 et un groupe aval 78. Le groupe amont 74 comprend deux visseuses séparées d'une distance de l'ordre de 74 mm. Le groupe aval 78 comprend deux visseuses séparées d'une distance de l'ordre de 85 mm. Le groupe central 76 comprend trois visseuses, celle disposée vers le groupe amont étant séparée de la visseuse du groupe amont la plus proche d'une distance de l'ordre de 84 mm, la même visseuse étant séparée de la visseuse en position médiane dans le groupe central d'une distance de l'ordre de 56 mm. En complément, la visseuse du groupe central disposée vers le groupe aval est séparée de la visseuse du groupe aval la plus proche d'une distance de l'ordre de 84 mm, et elle est séparée de la visseuse en position médiane dans le groupe central d'une distance de l'ordre de 38 mm.

Cet agencement permet d'assurer une fixation solide de la serrure sur le profilé et s'adapte à différents types de profilés sans avoir besoin de déplacer les visseuses.

De préférence, le robot comprend à son extrémité libre une seconde tête 80 adaptée pour manipuler les serrures et les profilés. Avantageusement, la seconde tête 80 comprend au moins une pince 82 adaptée pour saisir les profilés et de préférence deux pinces 82 susceptibles de saisir chacune un profilé.

Pour saisir les serrures, une des deux pinces 82 comprend entre ses mors un électro-aimant susceptible de saisir les serrures par accrochage magnétique.

Avantageusement, le poste d'équipement comprend un seul robot susceptible d'être équipé alternativement des têtes 64 et 80.

Le mode opératoire du poste 52 de mise en place des serrures est le suivant :
Dans un premier temps, la tête 80 saisit une serrure dans le magasin 70, comme illustré sur la figure 5A. En suivant, la tête 80 dépose la serrure sur un profilé 10 disposé sur le convoyeur 30 et saisit ce profilé avec sa serrure, comme illustré sur la figure 5B. La tête 80 dépose cet ensemble sur le poste 72 de vissage comme illustré sur la figure 5C. Pendant l'opération de vissage, la tête 80 saisit une nouvelle serrure, comme illustré sur la figure 5D, la dépose sur un nouveau profilé et saisit ce nouveau ensemble comme illustré sur la figure 5E.

La tête 80 se translate de manière à ce que la pince 82 vide soit au droit du profilé resté sur le poste 72 de vissage et saisisse ledit profilé équipé.

En suivant, la tête 80 dépose l'ensemble profilé/serrure non fixée sur le poste 72 de vissage, comme illustré sur la figure 5G, puis la tête 80 dépose le profilé équipé sur le convoyeur 30 pour être évacué. Pendant l'opération de vissage, la tête 80 saisit une nouvelle serrure alors que le convoyeur évacue le profilé équipé et achemine un profilé non équipé, comme illustré sur la figure 5D et ainsi de suite.

Cet agencement du poste 52 de mise en place des serrures ainsi que ce mode opératoire assurent un rendement optimal.

Bien entendu, l'invention n'est évidemment pas limitée au mode de réalisation représenté et décrit ci-dessus, mais en couvre au contraire toutes les variantes définies dans les revendications..

En variante, le dispositif de l'invention pourrait être utilisé pour usiner et équiper en éléments rapportés des parties de cadre ou des cadres au lieu des simples profilés. Ainsi, le terme « profilé(s) » couvre aussi bien un élément longiligne qu'une partie de cadre ou un cadre.

## Revendications

1. Dispositif d'usinage et d'équipement de profilés, de parties de cadre ou de cadres (10) destinés à la fabrication d'huisseries, de battants ou analogue, ledit dispositif d'usinage comprenant un centre d'usinage (12), un magasin d'approvisionnement (18) susceptible d'alimenter ledit centre d'usinage en profilés tronçonnés ou en partie de cadre ou en cadres, un magasin de stockage (20) en fin de parcours des profilés, des parties de cadre ou des cadres, un poste de contrôle (34) permettant de gérer l'acheminement des profilés, des parties de cadre ou des cadres (10) et de contrôler le centre d'usinage (12), et un poste d'équipement (36) des profilés, des parties de cadre ou des cadres (10) avec au moins un élément rapporté (11), commandé par le poste de contrôle (34) et disposé entre le centre d'usinage (12) et le magasin de stockage (20), **caractérisé en ce que** le poste d'équipement (36) comprend un robot ou bras articulé (54) comprenant à son extrémité libre une première tête (64) avec au moins une première pince (66) pour saisir un élément rapporté (11) et au moins une pince (68) prévue pour saisir un profilé, une partie de cadre ou un cadre.

2. Dispositif d'usinage et d'équipement de profilés, de parties de cadre ou de cadres (10) destinés à la fabrication d'huisseries, de battants ou analogue selon la revendication 1, **caractérisé en ce qu'**il comprend un poste (50) de mise en place des supports de roulettes (56) comprenant un support (60) pour les profilés, les parties de cadre ou les cadres, et des moyens (62) pour insérer les supports (56) dans les profilés, les parties de cadre ou les cadres.

3. Dispositif d'usinage et d'équipement de profilés, de parties de cadre ou de cadres (10) destinés à la fabrication d'huisseries, de battants ou analogue selon la revendication 1 ou 2, **caractérisé en ce que** la première tête (64) comprend deux pinces (68) séparées d'une distance correspondant à l'écartement entre le support (60) et un convoyeur (30) prévu pour acheminer les profilés, les parties de cadre ou les cadres.

4. Dispositif selon l'une quelconque des revendications 1 à 3, **caractérisé en ce qu'**il comprend un poste (52) de mise en place des serrures comprenant un magasin (70) de serrures ainsi qu'un poste de vissage (72) équipé d'une série de visseuses.

5. Dispositif selon la revendication 4, **caractérisé en ce que** le poste de vissage (72) comprend trois groupes de visseuses, un groupe amont (74), un groupe central (76) et un groupe aval (78), le groupe amont (74) comprenant deux visseuses séparées d'une distance de l'ordre de 74 mm, le groupe aval (78) comprenant deux visseuses séparées d'une distance de l'ordre de 85 mm, le groupe central (76) comprenant trois visseuses, celle disposée vers le groupe amont étant séparée de la visseuse du groupe amont la plus proche d'une distance de l'ordre de 84 mm, la même visseuse étant séparée de la visseuse en position médiane dans le groupe central d'une distance de l'ordre de 56 mm et celle disposée vers le groupe aval étant séparée de la visseuse du groupe aval la plus proche d'une distance de l'ordre de 84 mm, la même visseuse étant séparée de la visseuse en position médiane dans le groupe central d'une distance de l'ordre de 38 mm.

6. Dispositif selon l'une des revendications 1 à 5, **caractérisé en ce que** le robot (54) comprend à son extrémité libre une seconde tête (80) adaptée pour manipuler les serrures et les profilés, les parties de cadre ou les cadres.

7. Dispositif selon la revendication 6, **caractérisé en ce que** la seconde tête (80) comprend deux pinces (82) susceptibles de saisir chacune un profilé, une partie de cadre ou un cadre, une des deux pinces (82) comprenant entre ses mors un électro-aimant susceptible de saisir les serrures par accrochage magnétique.

## Claims

1. A device for machining and equipping profiles, frame parts or frames (10) intended for the fabrication of door frames, door leaves or the like, said machining device comprising a machining centre (12), a feed magazine (18) able to supply said machining centre with cut profiles or frame parts or frames, a storage magazine (20) at the end of travel of the profiles, frame parts or frames, a control station (34) for managing the routeing of the profiles, frame parts or frames (10) and for controlling the machining centre (12), and a station (36) for equipping the profiles, frame parts or frames (10) with at least one attached element (11), controlled by the control station (34) and disposed between the machining centre (12) and the storage magazine (20), **characterised in that** the equipping station (36) comprises a robot or articulated arm (54) comprising at its free end a first head (64) with at least one first clamp (66) for gripping an attached element (11) and at least one clamp (68) provided for gripping a profile, a frame part or a frame.

2. A device for machining and equipping profiles, frame parts or frames (10) intended for manufacturing door frames, door leaves or the like according to claim 1, **characterised in that** it comprises a station (50) for fitting roller supports (56) comprising a support (60) for the profiles, the frame parts or the frames, and means (62) for inserting the supports (56) in the profiles, frame parts or frames.

3. A device for machining and equipping profiles, frame parts or frames (10) intended for manufacturing door frames, door leaves or the like according to claim 1 or 2, **characterised in that** the first head (64) comprises two clamps (68) separated by a distance corresponding to the separation between the support (60) and a conveyor (30) provided for routeing the profiles, frame parts or frames.

4. A device according to any one of claims 1 to 3, **characterised in that** it comprises a station (52) for fitting locks comprising a lock magazine (70) as well as a screwing station (72) equipped with a series of screwdrivers.

5. A device according to claim 4, **characterised in that** the screwing station (72) comprises three groups of screwdrivers, an upstream group (74), a central group (76) and a downstream group (78), the upstream group (74) comprising two screwdrivers separated by a distance of around 74 mm, the downstream group (78) comprising two screwdrivers separated by a distance of around 85 mm, the central group (76) comprising three screwdrivers, the one disposed towards the upstream group being separated from the closest screwdriver in the upstream group by a distance of the order of 84 mm, the same screwdriver being separated from the screwdriver in the middle position in the central group by a distance of the order of 56 mm and the one disposed towards the downstream group being separated from the closest screwdriver in the downstream group by a distance of the order of 84 mm, the same screwdriver being separated from the screwdriver in the middle position in the central group by a distance of the order of 38 mm.

6. A device according to one of claims 1 to 5, **characterised in that** the robot (54) comprises at its free end a second head (80) arranged to manipulate the locks and the profiles, frame parts or frames.

7. A device according to claim 6, **characterised in that** the second head (80) comprises two clamps (82) each able to grip a profile, frame part or frame, one of the two clamps (82) comprising between its jaws an electromagnet able to grip the locks by magnetic attachment.

## Patentansprüche

1. Vorrichtung zur Bearbeitung und Ausrüstung von Profilen, Rahmenteilen oder Rahmen (10) zur Herstellung von Zargen, Flügeln oder dgl., wobei die Bearbeitungsvorrichtung ein Bearbeitungszentrum (12), ein Zuführungsmagazin (18) zur Versorgung des Bearbeitungszentrums mit Profilstücken oder Rahmenteilen oder Rahmen, ein Speichermagazin (20) am Ende der von den Profilen, Rahmenteilen oder Rahmen zurückgelegten Strecke, einen Steuerungsposten (34) zur Verwaltung der Zubringung der Profile, Rahmenteile oder Rahmen (10) und zur Steuerung des Bearbeitungszentrums (12) und eine Station zur Ausstattung (36) der Profile, Rahmenteile oder Rahmen (10) mit mindestens einem angesetzten Element (11), die von der Steuerungsstation (34) gesteuert wird und zwischen dem Bearbeitungszentrum (12) und dem Speichermagazin (20) angeordnet ist, umfasst, **dadurch gekennzeichnet, dass** die Station zur Ausstattung (36) einen Roboter oder einen Gelenkarm (54) umfasst, der an seinem freien Ende einen ersten Kopf (64) mit mindestens einem ersten Greifer (66) zum Erfassen eines angesetzten Elements (11) und mindestens einen Greifer (68) zum Erfassen eines Profils, Rahmenteils oder Rahmens umfasst.

2. Vorrichtung zur Bearbeitung und Ausrüstung von Profilen, Rahmenteilen bzw. Rahmen (10) zur Herstellung von Zargen, Flügeln oder dgl. nach Anspruch 1, **dadurch gekennzeichnet, dass** sie eine Station (50) zum Einsetzen von Rollenstützen (56) umfasst, welche einen Träger (60) für die Profile, Rahmenteile oder Rahmen sowie Mittel (62) zum Einführen der Stützen (56) in die Profile, Rahmenteile oder Rahmen umfassen.

3. Vorrichtung zur Bearbeitung und Ausrüstung von Profilen, Rahmenteilen bzw. Rahmen (10) zur Herstellung von Zargen, Flügeln oder dgl. nach Anspruch 1 bzw. 2, **dadurch gekennzeichnet, dass** der erste Kopf (64) zwei Greifer (68) umfasst, die einen Abstand voneinander aufweisen, der dem Abstand zwischen dem Träger (60) und einem zur Zuführung der Profile, Rahmenteile oder Rahmen vorgesehenen Fördermittel (30) entspricht.

4. Vorrichtung nach einem der Ansprüche 1 bis 3, **dadurch gekennzeichnet, dass** sie eine Station (52) zum Einsetzen von Schlössern umfasst, welche ein Schlossmagazin (70) sowie eine mit einer Reihe von Schraubern ausgestattete Schraubstation (72) umfasst.

5. Vorrichtung nach Anspruch 4, **dadurch gekennzeichnet, dass** die Schraubstation (72) drei Schraubergruppen umfasst, eine stromaufwärts gelegene Gruppe (74), eine mittlere Gruppe (76) und eine stromabwärts gelegene Gruppe (78), wobei die stromaufwärts gelegene Gruppe (74) zwei Schrauber umfasst, die einen Abstand voneinander von etwa 74 mm aufweisen, die stromabwärts gelegene Gruppe (78) zwei Schrauber umfasst, die einen Abstand voneinander von etwa 85 mm aufweisen, und die mittlere Gruppe (76) drei Schrauber umfasst, wobei der zur stromaufwärts gelegenen Gruppe hin angeordnete Schrauber einen Abstand von dem nächstgelegenen Schrauber der stromaufwärts gelegenen Gruppe aufweist, der etwa 84 mm beträgt, wobei der gleiche Schrauber einen Abstand von dem mittleren Schrauber der mittleren Gruppe aufweist, der etwa 56 mm beträgt, und wobei der zur stromabwärts gelegenen Gruppe hin angeordnete Schrauber einen Abstand von dem nächstgelegenen Schrauber der stromabwärts gelegenen Gruppe aufweist, der etwa 84 mm beträgt, wobei der gleiche Schrauber einen Abstand von dem mittleren Schrauber der mittleren Gruppe aufweist, der etwa 38 mm beträgt.

6. Vorrichtung nach einem der Ansprüche 1 bis 5, **dadurch gekennzeichnet, dass** der Roboter (54) an seinem freien Ende einen zweiten Kopf (80) zur Handhabung der Schlösser und der Profile, Rahmenteile oder Rahmen umfasst.

7. Vorrichtung nach Anspruch 6, **dadurch gekennzeichnet, dass** der zweite Kopf (80) zwei Greifer (82) zum Erfassen jeweils eines Profils, Rahmenteils oder Rahmens umfasst, wobei einer der beiden Greifer (82) zwischen seinen Backen einen Elektromagneten zum Erfassen der Schlösser durch magnetisches Anhaften umfasst.
